# EUROPÄISCHE PATENTSCHRIFT

(11) **EP 1 175 285 B1**
(45) Veröffentlichungstag und Bekanntmachung des Hinweises auf die Patenterteilung: **19.10.2005**
(21) Anmeldenummer: 01913569.8
(22) Anmeldetag: 02.02.2001
(51) Int. Cl.: B25B 23/04, F16B 27/00

(54) **MAGAZIN MIT MAGAZINBAND FÜR EINEN SCHRAUBER**
MAGAZINE WITH A MAGAZINE STRIP FOR A SCREWDRIVER
CHARGEUR AVEC RUBAN DE CHARGEMENT POUR TOURNEVIS

(30) Priorität: 04.02.2000 DE 20002058 U
(43) Veröffentlichungstag der Anmeldung: 30.01.2002
(73) Patentinhaber: Ahorn Geräte- und Werkzeuge-Vertriebs GmbH, 35410 Hungen (DE)
(72) Erfinder: WOLLNER, Markus, 63679 Schotten (DE)
(74) Vertreter: Hebing, Norbert
(86) Internationale Anmeldenummer: PCT/DE2001/000433
(87) Internationale Veröffentlichungsnummer: WO 2001/056748

(56) Entgegenhaltungen:
- EP-A- 0 593 970
- WO-A-93/09918
- WO-A-95/09705
- DE-A- 3 831 625
- US-A- 2 784 405
- US-A- 4 139 036

## Beschreibung

Die Erfindung betrifft ein Magazin für einen Schrauber mit einem dazu angepassten Magazinband zur Magazinierung von sukzessiv mittels des Schraubers herausdrückbaren und in die vorgesehenen Gegenstände einschraubbaren Schrauben, wobei das Magazin eine Führung für die Ränder des Magazinbandes hat, und mit den weiteren Merkmalen des Anspruches 1 .

Derzeit sind Magazinbänder für Schrauber als flache Gurtbänder ausgebildet, welche aufeinanderfolgend Durchbrüche aufweisen, in die jeweils eine zu magazinierende Schraube eingesetzt ist. Entsprechend ist die Führung durch zwei parallel laufende Schlitze gebildet, in die das Gurtband mit seinen flachen Rändern eingreift. Solche Magazine und Magazinbänder haben sich bei Senkkopfschrauben bewährt. Senkkopfschrauben haben Köpfe, die an ihrer Unterseite konisch ausgebildet sind. Deshalb lassen sich die Schrauben mit ihren Köpfen mit relativ geringen Kräften aus den Durchbrüchen des Magazinbandes drücken.

Wenn in einem Magazinband Schrauben mit Köpfen magaziniert werden, die an ihrer Unterseite flach ausgebildet sind, beispielsweise Sechskantschrauben, dann erfordert das Herausdrücken der Schrauben aus dem Magazinband relativ hohe Kräfte, weil die Schraubenköpfe vollflächig auf dem Gurtband aufsitzen. Deshalb muss das Gurtband stabil ausgeführt werden, damit es sich beim Herausdrücken der jeweiligen Schraube nicht so stark durchbiegt, dass es aus der Führung des Magazins herausrutscht. Eine stabile Ausführung des Gurtbandes wirkt zwar der Gefahr eines Durchbiegens des Gurtbandes entgegen, erhöht jedoch gleichzeitig die erforderlichen Kräfte zum Herausdrücken der jeweiligen Schraube aus ihrem Durchbruch, wenn dieser nicht aufwendig gestaltet wird.

In dem Dokument WO 93/09918 A ist ein Magazin beschrieben mit einem Magazinband, welches an beiden Seiten einen flanschartigen Rand mit jeweils einer einseitigen Verdickung hat, die vermutlich die Aufgabe haben, im Betrieb die einzelnen, jeweils einen Niet tragenden Bereiche des Magazinbandes eben zu halten.

Die Verdickungen sind nicht geeignet, dieses zwischen den Führungen des Magazins so einzuspannen, dass auch bei hohen Druckkräften das Magazinband nicht aus der Führung herausgelangt.

Der Erfindung liegt das Problem zugrunde, ein Magazin und ein Magazinband der eingangs genannten Art so zu gestalten, dass beim Herausdrücken der jeweiligen Schraube aus dem Magazinband keine Gefahr besteht, dass sich das Magazinband so stark verbiegt, dass es aus seiner Führung herausgelangen kann.

Dieses Problem wird erfindungsgemäß dadurch gelöst, dass die Verdickung durch jeweils einen Steg gebildet ist, welcher mit dem Gurtteil ein Doppel-T-Profil bildet. Ein solches Magazinband kann besonders gut in der Führung des Magazins geführt werden und benötigt nur eine geringe Festigkeit.

Durch diese Gestaltung wird das Magazinband in den Führungsteilen quer zu seiner Transportrichtung formschlüssig eingespannt. Es kann deshalb auch bei hohen Druckkräften auf die Schrauben auch dann nicht aus den Führungsteilen herausgelangen, wenn man das flache Gurtteil sehr dünnwandig ausführt. Deshalb ist es möglich, das Gurtteil so dünn auszubilden, dass bei einer sehr einfachen Formgebung der Durchbrüche sich trotz der flachen Schraubenköpfe geringe Kräfte zum Durchdrücken der Schraubenköpfe durch die Durchbrüche ergeben. Das Magazinband gemäß der Erfindung kann daher sehr einfach gestaltet sein und hat einen geringeren Materialbedarf als die bisher gebräuchlichen Magazinbänder. Da das Magazinband nach Gebrauch Abfall darstellt, ist die Materialersparnis von hoher Bedeutung, so dass das erfindungsgemäße Magazinband auch bei Schrauben mit Senkkopf sinnvoll einzusetzen ist.

Die Führung des Magazins ist vorteilhafterweise an jeder Seite des Magazinbandes als T-Nut ausgebildet.

Die Erfindung bezieht sich außerdem auf ein Magazinband.

Die Erfindung lässt verschiedene Ausführungsformen zu. Eine davon ist in der Zeichnung dargestellt und wird nachfolgend beschrieben. Die Zeichnung zeigt in
- Fig.1: einen Schnitt durch einen unteren Bereich eines Magazins für einen Schrauber mit eingesetztem Magazinband,
- Fig.2: einen Querschnitt durch das Magazinband, maßstäblich gegenüber Figur 1 stark vergrößert,
- Fig.3: eine Draufsicht auf das Magazinband.

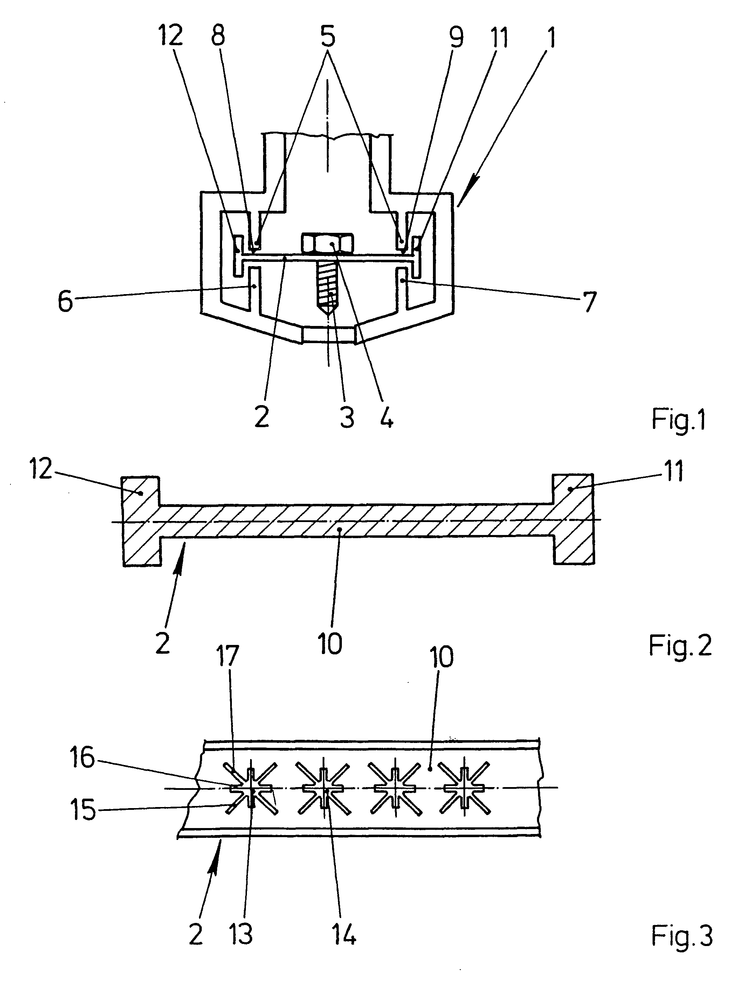

Die Figur 1 zeigt einen unteren Bereich eines Magazins 1, durch welches ein Magazinband 2 mit Schrauben 3 führt. Diese Schrauben 3 haben jeweils einen Sechskantkopf 4, welcher auf seiner Unterseite, wie bei solchen Sechskantköpfen üblich, flach ausgeführt ist. Das Magazinband 2 wird in dem Magazin 1 mittels einer Führung 5 geführt, welche an jeder Seite des Magazinbandes 2 ein Führungsteil 6, 7 mit einem Führungsschlitz 8, 9 hat.

Die Figur 2 zeigt, dass das Magazinband 2 aus einem flachen Gurtteil 10 mit jeweils einer Verdickung 11, 12 an seinem Rand gebildet ist. Bei der gezeigten Ausführungsform sind die Verdickungen 11, 12 jeweils als sich quer zur Ebene des Gurtteils 10 erstreckender Steg ausgebildet. Diese Stege bilden zusammen mit dem Gurtteil 10 ein Doppel-T-Profil.

Die Figur 3 lässt erkennen, dass im Gurtteil 10 des Magazinbandes 2 hintereinander Durchbrüche 13, 14 vorgesehen sind, in die jeweils eine der in Figur 1 gezeigten Schrauben 3 magaziniert wird. Diese Durchbrüche 13, 14 weisen sternförmige Einschnitte 15, 16, 17 auf, so dass die Schrauben 3 mit ihren Sechskantköpfen 4 relativ leicht durch die Durchbrüche 13, 14 gedrückt werden können.

Wie die Figur 1 zeigt, läuft das Magazinband 2 so durch das Magazin 1, dass sich die Verdickungen 11, 12 auf der Außenseite der Führungsteile 6, 7 befinden. Dadurch kann das Magazinband 2 auch dann nicht aus der Führung 5 herausgelangen, wenn man mit relativ hohen Kräften auf den jeweiligen Sechskantkopf 4 drückt.

### Bezugszeichenliste

- 1: Magazin
- 2: Magazinband
- 3: Schraube
- 4: Sechskantkopf
- 5: Führung

- 6: Führungsteil
- 7: Führungsteil
- 8: Führungsschlitz
- 9: Führungsschlitz
- 10: Gurtteil

- 11: Verdickung
- 12: Verdickung
- 13: Durchbruch
- 14: Durchbruch
- 15: Einschnitt

- 16: Einschnitt
- 17: Einschnitt

## Patentansprüche

1. Magazin für einen Schrauber mit einem dazu angepassten Magazinband (2) zur Magazinierung von sukzessiv mittels des Schraubers herausdrückbaren und in die vorgesehenen Gegenstände einschraubbaren Schrauben (3), wobei das Magazin (1) eine Führung (5) für die Ränder des Magazinbandes (2) hat, wobei das Magazinband (2) aus einem flachen Gurtteil (10) und einer entlang der Ränder verlaufenden Verdickung (11, 12) besteht und die Führung (5) entsprechend an jeder Seite des Magazinbandes (2) ein Führungsteil (6, 7) mit einem Führungsschlitz (8, 9) hat und dieses Führungsteil (6, 7) so bemessen ist, dass die Verdickung (11, 12) jeweils formschlüssig außenseitig des Führungsteils (6, 7) verläuft, wenn das Gurtteil (10) im Führungsschlitz (8, 9) eingesetzt ist, **dadurch gekennzeichnet, dass** die Führung an jeder Seite des Magazinbandes (2) als T-Nut ausgebildet ist.

2. Magazinband zur Magazinierung von sukzessiv mittels eines Schraubers herausdrückbaren und in die vorgesehenen Gegenstände einschraubbaren Schrauben (3) in einem Magazin (1), wobei das Magazin (1) eine Führung für die Ränder des Magazinbandes (2) hat; das Magazinband (2) besteht aus einem flachen Gurtteil (10) und einer entlang der Ränder des Gurtteils verlaufenden verdickung (11, 12), **dadurch gekennzeichnet, dass** die verdickung (11, 12) durch jeweils einen Steg gebildet ist, welcher mit dem Gurtteil (10) ein Doppel-T-Profil bildet, so dass es zum Gebrauch in einem Magazin nach Anspruch 1 verwendbar ist.

## Claims

1. A magazine for a screwdriver with a magazine tape adapted thereto for storing screws (3) which can be pressed out successively by means of the screwdriver and screwed into the intended objects, the magazine (1) having a guide (5) for the edges of the magazine tape (2), wherein the magazine tape (2) consists of a flat belt part (10) and a thickening (11, 12), which extends along the edges, and, at each side of the magazine tape (2), the guide (5) correspondingly has a guide part (6, 7) with a guide slot (8, 9) and the dimensions of this guide part (6, 7) are such that the thickening (11, 12) in each case extends positively on the outside of the guide part (6, 7) when the belt part (10) is inserted in the guide slot (8, 9), **characterized in that** the guide is formed as a T-shaped groove at each side of the magazine tape (2).

2. Magazine tape for storing screws (3) which can be pressed out successively by means of the screwdriver and screwed into the intended objects, the magazine (1) having a guide (5) for the edges of the magazine tape (2); the magazine tape (2) consists of a flat belt part (10) and a thickening (11, 12), which extends along the edges, **characterized in that** the thickening (11, 12) is formed in each case by a web which together with the belt part (10) forms a double T-shaped profile so that it may be used in a magazine according to claim 1.

## Revendications

1. Chargeur destiné à une visseuse, comportant une bande de chargement (2) adaptée à cette fin pour le stockage de vis (3) pouvant être successivement poussées hors de la bande et vissées dans les objets prévus au moyen de la visseuse, le chargeur (1) présentant un guide (5) pour les bords de la bande de chargement, la bande de chargement (2) étant composée d'un partie courroie (10) plate et d'un épaississement (11, 12) passant le long des bords, et le guide (5) présentant de manière correspondante de chaque côté de la bande de chargement (2) un élément de guidage (6, 7) comportant une fente de guidage (8, 9), et cet élément de guidage (6, 7) étant dimensionné de telle façon que l'épaississement (6, 7) passe du côté extérieur de l'élément de guidage (6, 7) lorsque la partie courroie (10) est mise en place dans la fente de guidage (8, 9, **caractérisé en ce que** le guide est conçu de chaque côté de la bande de chargement sous la forme d'une rainure en T.

2. Bande de chargement pour le stockage de vis (3) pouvant être successivement poussées hors de la bande et vissées dans les objets prévus au moyen d'une visseuse, le chargeur (1) présentant un guide (5) pour les bords de la bande de chargement ; la bande de chargement (2) est composée d'une partie courroie (10) plate et d'un épaississement (11, 12) passant le long des bords de la partie courroie, **caractérisée en ce que** les épaississements (11, 12) sont chacun formés par une traverse qui forme un profil en double T avec la partie courroie (10), de sorte qu'elle est appropriée pour une utilisation dans le chargeur selon la revendication 1.
